(19) Europäisches Patentamt
European Patent Office
Office européen des brevets

(11) EP 4 578 898 A1

(12) **EUROPEAN PATENT APPLICATION**
published in accordance with Art. 153(4) EPC

(43) Date of publication:
**02.07.2025 Bulletin 2025/27**

(21) Application number: **23857786.0**

(22) Date of filing: **25.08.2023**

(51) International Patent Classification (IPC):
*C08J 5/18* (2006.01) *C08L 67/02* (2006.01)
*C08K 5/10* (2006.01) *C08K 5/11* (2006.01)

(52) Cooperative Patent Classification (CPC):
**C08J 5/18; C08K 5/10; C08K 5/11; C08L 67/02**

(86) International application number:
**PCT/KR2023/012657**

(87) International publication number:
**WO 2024/043754 (29.02.2024 Gazette 2024/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.08.2022 KR 20220107779**

(71) Applicant: **SK microworks Co., Ltd.
Chungcheongbuk-do 27818 (KR)**

(72) Inventors:
- **LEE, Sang Hyun
Seoul 07793 (KR)**
- **HAN, Jae Il
Seoul 07793 (KR)**
- **CHOI, Hong Jun
Seoul 07793 (KR)**
- **PARK, Eun Young
Seoul 07793 (KR)**
- **BAEK, Sang Hyun
Seoul 07793 (KR)**

(74) Representative: **Dehns
10 Old Bailey
London EC4M 7NG (GB)**

(54) **RECYCLED PET FILM MANUFACTURED USING RECYCLED CHIPS**

(57) A recycled PET film according to the present invention can have significantly low yellowing and color difference values compared to conventional recycled PET films due to the inclusion of a complementary colorant containing a glycerin-based compound, and at the same time satisfy breaking strength and thermal shrinkage levels to replace a new PET material.

Fig. 1

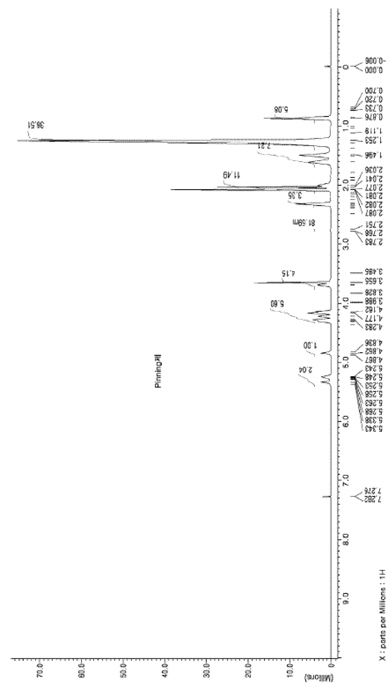

EP 4 578 898 A1

## Description

### Technical Field

The present disclosure relates to a recycled polyethylene terephthalate (PET) film prepared to include waste PET and a complementary color agent, and a method of preparing the same.

### Background Art

Polyethylene terephthalate (PET) has excellent durability, processability, and thermal stability and thus has been used in various fields such as clothes, packaging containers, home appliances, vehicles, and films. However, PET has high porosity and is not biodegradable, which makes it difficult to treat waste PET and has caused serious environmental pollution problems in a landfill or incineration process.

Therefore, a technology for recycling waste PET is attracting attention to solve problems of environmental pollution and rising costs due to oil resource depletion.

In a recycling process of recycling waste PET, waste PET subjected to processes such as a selecting process, a foreign material removing process, a cleaning process, and a metal separating process is used and made into clothing, packaging containers, home appliances, automobiles, and films. However, the clothing, packaging containers, home appliances, automobiles, and films have lower physical properties than PET products made of virgin PET and thus have a limitation in use for recycling.

In particular, since recycled PET films prepared by including waste PET have more difficult processing conditions than other molded products and are prepared by being stretching 4 times to 5 times the original length in a transverse/axial direction, there are many limitations on the physical properties of used PET resins, heat treatment process conditions, and additive contents, and also, since various grades of waste PET are mixed together, processing conditions for recycling the waste PET into films are more difficult.

As a result, recycled PET films according to a related art prepared by including waste PET had low film forming properties, and in particular, had very poor appearance properties due to an increased color difference value.

In recent years, in recycled PET films prepared by including waste PET, in order to solve a problem of an increase in color difference value, a complementary color agent containing organic/inorganic compounds has been added, but the recycled PET films still have a color difference value that is higher than that of virgin PET films, and the addition of the complementary color agent causes a yellowing phenomenon in which a color difference value is changed due to external environments of temperature, humidity, heat, or the like. In addition, recycled PET films according to a related art, to which organic/inorganic compounds are added as a complementary color agent, have an increased heat shrinkage ratio and decreased breaking strength, which makes it technically difficult to simultaneously satisfy appearance properties, heat resistance, and mechanical properties of the recycled PET films.

Therefore, in order to prepare recycled PET films by including waste PET, there is a need for a new technology capable of providing excellent film processability, and furthermore, there is a need to develop a new technology capable of solving a problem of a high color difference value of recycled PET films according to a related art and also providing significantly high yellowing resistance to simultaneously satisfy a heat shrinkage ratio and mechanical strength.

[Related Art Documents]

[Patent Documents]

(Patent Document 1) Korean Patent Publication No. 10-2013-0035897 A
(Patent Document 2) Korean Patent Publication No. 10-2022-0003140 A

### Disclosure of Invention

### Technical Problem

As an embodiment, in order to solve a problem of a low recycled polyethylene terephthalate (PET) film forming properties of waste PET according to a related art, the present disclosure is directed to providing a recycled PET film in which a recycled chip prepared by including waste PET and a molding modifier is prepared and used to achieve low haze and excellent film forming properties.

As an embodiment, a recycled PET film according to a related art prepared by including waste PET has a high

color difference value, but the present disclosure is directed to providing a recycled PET film which includes a complementary color agent containing a specific organic compound to have a lower color difference value.

As an embodiment, the present disclosure is directed to providing a recycled PET film in which a complementary color agent containing the specific organic compound is included, and a content thereof is adjusted to solve problems of a high yellowing phenomenon, a high heat shrinkage ratio, and a decrease in breaking strength of a recycled PET film according to a related art including a complementary color agent, thereby implementing a low color difference value, low yellowing resistance, a low heat shrinkage ratio, and excellent breaking strength at the same time.

As an embodiment, the present disclosure is directed to providing a recycled PET film in which, when the recycled PET film is analyzed through a measurement method defined in the present disclosure, a color difference value L is 70 or less, a color difference value b is 5 or less, the color difference value L is 65 or less and preferably 62 or less, and yellowing resistance is 10 % or less or 7 % or less.

In addition, as an embodiment, the present disclosure is directed to providing a recycled PET film in which, when the recycled PET film prepared by including waste PET and a specific complementary color agent is measured through an analysis method defined in the present invention, a heat shrinkage ratio is 5 % or less in a transverse direction (TD) and 1 % or less in a machine direction (MD), and breaking strength is 10 kgf/$mm^2$ or more in both the MD and the TD.

**Solution to Problem**

A recycled polyethylene terephthalate (PET) film according to the present invention includes waste PET and virgin PET as PET resin components and a complementary color agent wherein, in the recycled PET film, yellowing resistance measured according to ASTM D1925 is in a range of 5 % to 10 %, and a color difference value L and a color difference value b, which are measured according to ASTM E313, are respectively in a range of 59 to 70 and 5 or less, and the complementary color agent contains a glycerin-based compound represented by Formula 1 below:

[Formula 1]

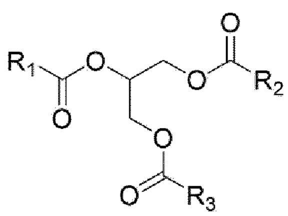

(wherein, in Formula 1, $R_1$, $R_2$, and $R_3$ are each independently straight or branched $C_1$-$C_{20}$ alkyl or straight or branched $C_1$-$C_{20}$ unsaturated alkyl.)

As an embodiment, the complementary color agent may include an organic compound represented by Formula 2 below, an organic compound represented by Formula 3 below, or a mixture thereof:

[Formula 2]

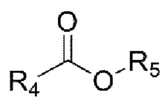

(wherein, in Formula 2, $R_4$ and $R_5$ are each independently straight or branched $C_1$-$C_{20}$ alkyl or straight or branched $C_1$-$C_{20}$ unsaturated alkyl.) and

[Formula 3]

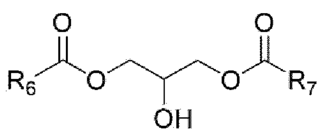

(wherein, in Formula 3, $R_6$ and $R_7$ are each independently straight or branched $C_1$-$C_{20}$ alkyl or straight or branched $C_1$-$C_{20}$ unsaturated alkyl.)

As an embodiment, the recycled PET film may include the complementary color agent in a range of 10 ppm to 100 ppm.

As an embodiment, in Formulae 1 to 3, $R_1$, $R_2$, $R_3$, $R_4$, $R_5$, $R_6$, and $R_7$ may each independently be straight or branched $C_1$-$C_{12}$ alkyl or straight or branched $C_1$-$C_{12}$ unsaturated alkyl.

As an embodiment, the recycled PET film may include metal ions in a range of 10 ppm to 200 ppm, wherein the metal ions are derived from a virgin chip prepared by including a molding modifier.

As another embodiment, the recycled PET film may satisfy Expressions 1 to 3 below:

[Expression 1]

$$10 \leq [Mg] \leq 100$$

[Expression 2]

$$0.1 \leq [Na] \leq 10$$

[Expression 3]

$$1 \leq [P] \leq 50$$

(wherein, in Expressions 1 to 3, [Mg] is a concentration (ppm) of magnesium ions included in the recycled PET film, [Na] is a concentration (ppm) of sodium ions included in the recycled PET film, and [P] is a concentration (ppm) of phosphorus ions included in the recycled PET film.)

As an embodiment, the recycled PET film may include an antiblocking agent in a range of 300 ppm to 1,000 ppm.

As an embodiment, in the recycled PET film, breaking strength measured according to ASTM D882 may be in a range of 10 kgf/mm$^2$ to 30 kgf/mm$^2$ in both of a machine direction (MD) and a transverse direction (TD).

As an embodiment, the recycled PET film may have a heat shrinkage ratio of 5 % or less in an MD and 1 % or less in a TD at a temperature of 200 °C.

As an embodiment, the recycled PET film may include the waste PET in a range of 30 wt% to 95 wt% and the virgin PET in a range of 5 wt% to 70 wt%. For example, the recycled PET film may include the waste PET in a range of 50 wt% to 90 wt% and the virgin PET in a range of 10 wt% to 50 wt%, may include the waste PET in a range of 60 wt% to 90 wt% and the virgin PET in a range of 10 wt% to 40 wt%, or may include the waste PET in a range of 60 wt% to 80 wt% and the virgin PET in a range of 20 wt% to 40 wt%.

A method of preparing a recycled PET film according to the present invention includes preparing a recycled chip by including waste PET, preparing a virgin chip by including virgin PET, and preparing a recycled PET film by including the recycled chip, the virgin chip, and a glycerin-based compound represented by Formula 1:

[Formula 1]

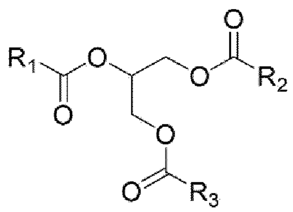

(wherein, in Formula 1, $R_1$, $R_2$, and $R_3$ are each independently straight or branched $C_1$-$C_{20}$ alkyl or straight or branched $C_1$-$C_{20}$ unsaturated alkyl.)

As an embodiment, the preparing of the recycled PET film, the recycled PET film may include the waste PET in a range of 30 wt% to 95 wt% and the virgin PET in a range of 5 wt% to 70 wt%. For example, the recycled PET film may include the waste PET in a range of 50 wt% to 90 wt% and the virgin PET in a range of 10 wt% to 50 wt%, may include the waste PET in a range of 60 wt% to 90 wt% and the virgin PET in a range of 10 wt% to 40 wt%, or may include the waste PET in a range of 60 wt% to 80 wt% and the virgin PET in a range of 20 wt% to 40 wt%.

As an embodiment, the virgin chip may be prepared by including a molding modifier in a range of 150 ppm to 14,000 ppm.

As an embodiment, the virgin chip may be prepared by including an antiblocking agent in a range of 150 ppm to

20,000 ppm.

## Advantageous Effects of Invention

Even when a recycled polyethylene terephthalate (PET) film according to an embodiment of the present invention is prepared by including a recycled chip in a range of 30 wt% or more, 50 wt% or more, and preferably 80 wt% or more, the recycled PET film may have significantly high film forming properties and significantly high transparency, surface performance, and mechanical strength as compared with a recycled PET film according to a related art so that the recycled PET film may replace virgin PET films in fields in which the virgin PET films prepared from virgin PET resins are used.

According to an embodiment of the present invention, a recycled PET film may include a recycled chip and a complementary color agent containing a specific organic compound, thereby solving a problem of a high color difference value of a recycled PET film according to a related art.

A recycled PET film according to an embodiment of the present invention may include a complementary color agent containing a specific organic compound, and a content of the complementary color agent may be adjusted to maintain an excellent yellowing resistance phenomenon, high heat shrinkage ratio, and high breaking strength, thereby implementing excellent haze, film forming properties, yellowing resistance, color difference value, heat shrinkage ratio, and breaking strength at the same time.

Therefore, in a recycled PET film according to the present invention, recycled PET film forming properties may be implemented, and thus, even when a large amount of waste PET is included, significant transparency and surface performance may be implemented as compared with a recycled PET film according to a related art. In addition, a recycled PET film according to the present invention may include a complementary color agent containing a specific organic compound, thereby implementing significantly high yellowing resistance as compared with a recycled PET film according to a related art, and remarkably, a heat shrinkage ratio and breaking strength may be maintained so that the recycled PET film according to the present invention may be more usefully used than a recycled PET film according to a related art.

## Brief Description of Drawings

FIG. 1 is a graph showing results of nuclear magnetic resonance (NMR) measurement of Example 4.
FIG. 2 is a graph showing results of ICP-OES measurement of Example 4.

## Best Mode for Carrying out the Invention

Hereinafter, a recycled polyethylene terephthalate (PET) film and a method of preparing the same according to the present invention will be described in detail. In this case, technical terms and scientific terms used in the present specification have the general meaning understood by those skilled in the art to which the present invention pertains unless otherwise defined, and description for the known function and configuration which may unnecessarily obscure the gist of the present invention will be omitted in the following description.

The singular form used in the present specification may be intended to also include a plural form, unless otherwise indicated in the context.

In addition, the numerical range used in the present specification includes all values within the range including the lower limit and the upper limit, increments logically derived in a form and span in a defined range, all double limited values, and all possible combinations of the upper limit and the lower limit in the numerical range defined in different forms. Unless otherwise defined in the specification of the present invention, values which may be outside a numerical range due to experimental error or rounding of a value are also included in the defined numerical range.

The term "comprise" in the present specification is an open-ended description having a meaning equivalent to the term such as "is/are provided," "contain," "have," or "is/are characterized, and does not exclude elements, materials, or processes which are not further listed.

Due to low film forming properties, a recycled PET film according to a related art prepared by including waste PET was difficult to continuously prepare and thus had significantly low transparency. In particular, the recycled PET film had a significantly higher color difference value than a virgin PET film and thus was difficult to apply to fields requiring excellent optical properties.

In order to solve such problems, there was an attempt to add a complementary color agent to a recycled PET film according to a related art to have a lower color difference value. However, it could not solve a problem of an increase in color difference value, and it could not solve problems of an increase in yellowing resistance, an increase in heat shrinkage ratio, and a decrease in breaking strength due to the addition of the complementary color agent.

In order to solve the problems of the low film forming properties and the high color difference value of the recycled PET film according to the related art, the present inventors have prepared a recycled PET film including waste PET and a complementary color agent containing a specific organic compound to have a lower color difference value. Remarkably, the recycled PET film could also have significantly high yellowing resistance.

In addition, in order to solve a problem that excellent properties could not be implemented at the same time due to complementary relations between optical properties, thermal properties, and mechanical properties in a related art, the present inventors have founded that, even when a small amount of a complementary color agent containing a specific organic compound is added, the recycled PET film has a significant complementary color effect and thus does not cause problems of an increase in heat shrinkage ratio and a decrease in breaking strength due to the addition of the complementary color agent, thereby completing the present invention.

Hereinafter, the recycled PET film of the present invention will be described in detail.

The recycled PET film according to the present invention may be prepared by including waste PET and virgin PET and may include a complementary color agent containing a specific organic compound to thus have a significantly lower color difference value than a recycled PET film according to a related art prepared by including waste PET. In addition, excellent yellowing resistance, a low heat shrinkage ratio, and excellent breaking strength may be implemented at the same time.

According to an embodiment, the recycled PET film may include the waste PET and the virgin PET as resin components and may include a complementary color agent containing a glycerin-based compound represented by Formula 1 below.

[Formula 1]

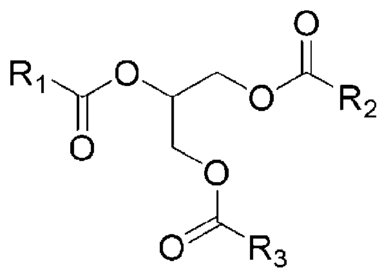

(wherein, in Formula 1, $R_1$, $R_2$, and $R_3$ are each independently straight or branched $C_1$-$C_{20}$ alkyl or straight or branched $C_1$-$C_{20}$ unsaturated alkyl.)

As an embodiment, $R_1$, $R_2$, and $R_3$ in Formula 1 may each independently be straight or branched $C_1$-$C_5$ alkyl or straight or branched $C_2$-$C_5$ unsaturated alkyl.

For example, the triacylglycerin-based compound represented by Formula 1 may include glyceryl triacetate (triacetin), tripropionin, glyceryl tributyrate (tributyrin), or glycerol trivalerate, but the present invention is not limited thereto.

As an embodiment, the recycled PET film may include the complementary color agent containing the glycerin-based compound represented by Formula 1 to better disperse a residual grade and added additives included in a waste PET resin and thus may have a lower color difference value than a recycled PET film according to a related art.

In addition, the recycled PET film, which includes the complementary color agent containing the glycerin-based compound, may have a stable structure and thus may not be easily decomposed in external environments of ultraviolet (UV) light, heat, humidity, and the like. Therefore, the deterioration of the included waste PET may be minimized, thereby implementing significantly high yellowing resistance as compared with a PET film according to a related art.

The recycled PET film according to an embodiment may be prepared by including the complementary color agent. A yellowing resistance of the recycled PET film measured according to ASTM D1925 may be in a range of 5 % to 10 %, and a color difference value L and a color difference value b, which are measured according to ASTM E313, may be in a range of 59 to 70 and 5 or less, respectively.

As another embodiment, in the recycled PET film, the yellowing resistance may be in a range of 5 % to 8 % and preferably 5 % to 6 %, the color difference value L may be in a range of 59 to 65 and preferably 59 to 62, a color difference value a may be -1.5 or less, and the color difference value b may be 3 or less.

Specifically, the recycled PET film is not limited thereto, but a lower limit of the color difference value a may be -3.0 or more, -2.0 or more, and preferably -1.5 or more, and a lower limit of the color difference value b may be 0.3 or more, 0.1 or more, and preferably 0.05 or more.

The recycled PET film having a color difference value in such a range may not only solve a problem of a high color difference value of a recycled PET film according to a related art, but may also have a color difference value at a level sufficient to replace a virgin PET film so that the recycled PET film may be applied in a wider range of industrial fields.

In addition, since the recycled PET film having yellowing resistance in such a range may have significantly high

yellowing resistance as compared with a recycled PET film according to a related art and thus may continuously maintain an initial color difference value even in environments exposed to strong energy or external environments of UV light, humidity, heat, and the like so that the recycled PET film may be preferred.

The complementary color agent according to an embodiment may further include at least one of organic compounds represented by Formula 2 and Formula 3 below:

[Formula 2]

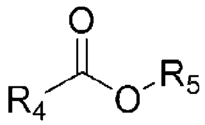

(wherein, in Formula 2, $R_4$ and $R_5$ are each independently straight or branched $C_1$-$C_{20}$ alkyl or straight or branched $C_1$-$C_{20}$ unsaturated alkyl.) and

[Formula 3]

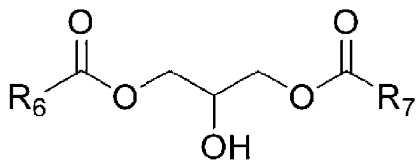

(wherein, in Formula 3, $R_6$ and $R_7$ are each independently straight or branched $C_1$-$C_{20}$ alkyl or straight or branched $C_1$-$C_{20}$ unsaturated alkyl.)

According to another embodiment, since the complementary color agent included in the recycled PET film may include not only the glycerin-based compound represented by Formula 1, but also at least one of the organic compounds represented by Formula 2 and Formula 3, the recycled PET film may disperse a residual grade and additives of the waste PET better than the recycled PET film including the glycerin-based compound and thus may be preferred.

A complementary color agent, which includes an organic compound in which $R_1$, $R_2$, $R_3$, $R_4$, $R_5$, $R_6$, and $R_7$ in Formulas 1 to 3 according to an embodiment are each straight or branched $C_1$-$C_{12}$ alkyl and preferably straight $C_1$-$C_{12}$ alkyl, may have a significantly lower color difference value, but the present invention is not limited thereto.

The recycled PET film according to an embodiment may include the complementary color agent in a range of 5 ppm to 200 ppm, 10 ppm to 100 ppm, preferably 30 ppm to 80 ppm, and more preferably 40 ppm to 60 ppm.

The recycled PET film including the complementary color agent in such a ppm range may have a low color difference value and more significantly high yellowing resistance. That is, the recycled PET film may satisfy a color difference value L of 70 or less and a yellowing resistance of 5 % to 10 %.

However, a recycled PET film including the complementary color agent in a range exceeding 100 ppm may have a lower color difference value and significantly high yellowing resistance, but may have an increased heat shrinkage ratio and decreased mechanical strength. Thus, it is preferable that the complementary color agent is included in such a ppm range.

According to an embodiment, the recycled PET film may include metal ions, which are derived from a virgin chip, in a range of 10 ppm to 200 ppm.

Specifically, the recycled PET film may include the metal ions in a range of 10 ppm to 100 ppm or 60 ppm to 130 ppm, and the metal ions may be derived from a molding modifier included in a process of preparing a virgin chip.

Examples of the molding modifier may include at least one selected from metal compounds (metal salts) including metal cations of magnesium, sodium, potassium, lithium, manganese, zinc, and the like; and phosphorus-based compounds such as trimethyl phosphate, triethyl phosphate, and tributyl phosphate.

Specifically, in terms of the metal ions included in the recycled PET film being included with excellent dispersion, the molding modifier may include at least one of a magnesium compound, a sodium compound, and a phosphorus compound, and more specifically may include at least one of magnesium acetate, sodium acetate, and trimethyl (ethyl) phosphate.

The virgin chip prepared by including the molding modifier may include metal ions in the molding modifier. As an example, the metal ions may include $Mg^{2+}$, $Na^{+}$, $Ca^{2+}$, $P0_4^{3-}$, or $Li^{+}$ which may be included in the recycled PET film.

Even when including a small amount of metal ions, the recycled PET film including the metal ions derived from the molding modifier may have excellent PET film forming properties so that the metal ions may be prevented from

agglomerating on a surface, and excellent film forming properties may be implemented.

In addition, the recycled PET film including the metal ions in such a ppm range may solve low film forming properties of waste PET and may also have a smooth surface and a complementary effect in which the complementary color agent suppresses the agglomeration of the metal ions contained therein. Thus, the recycled PET film may have significantly higher transparency and a low color difference value.

As an embodiment, the recycled PET film may satisfy Expressions 1 to 3 below.

[Expression 1]

$$10 \leq [Mg] \leq 100$$

[Expression 2]

$$0.1 \leq [Na] \leq 10$$

[Expression 3]

$$1 \leq [P] \leq 10$$

(wherein, in Expressions 1 to 3, [Mg] is a concentration (ppm) of magnesium ions included in the recycled PET film, [Na] is a concentration (ppm) of sodium ions included in the recycled PET film, and [P] is a concentration (ppm) of phosphorus ions included in the recycled PET film.)

As another embodiment, in Expressions 1 to 3, [Mg] may be in a range of 10 to 80, [Na] may be in a range of 0.1 to 5, and [P] may be in a range of 1 to 5.

The recycled PET film including the magnesium ions, sodium ions, and phosphorus ions in such ppm ranges may have significantly high film forming properties as compared with a recycled PET film according to a related art, and also the magnesium ions, sodium ions, and phosphorus ions may be included in a smaller amount and may not aggregate so that the recycled PET film may have a low haze and a low color difference value and may have better heat resistance to be preferred.

The recycled PET film according to an embodiment may include an antiblocking agent in a range of 300 ppm to 1,000 ppm, preferably 400 ppm to 800 ppm, and more preferably 500 ppm to 800 ppm.

Since recycled PET films are not attached to each other during a manufacturing process, consistent processability may be secured, and defects due to scratches may be significantly reduced so that the recycled PET film including the antiblocking agent in such a range may be preferred.

The antiblocking agent may include inorganic particles, organic particles, or a mixture thereof. As an example, the antiblocking agent may include at least one selected from NaF, $MgF_2$, $CaF_2$, $BaF_2$, $SiO_2$, $BaSO_4$, $CeF_3$, $Al_2O_3$, $ZrO_2$, $TiO_2$, ZnS, ZnSe, and $Ta_2O_5$. Specifically, when the antiblocking agent includes SiO2, excellent recycled PET film forming properties may be implemented, but a material of the antiblocking agent is not limited as long as the material may be recognized by a person skilled in the art.

The recycled PET film according to an embodiment may further include at least one additive selected from the group consisting of a lubricant, a stabilizer, a plasticizer, a UV stabilizer, a heat stabilizer, a filler, a pigment, a blowing agent, a viscosity regulator, a processing aid, a flame retardant, an enhancer, and a dispersant.

The recycled PET film further including the above-described additive may have different physical properties according to the type and content of the additive and thus may be applied in a wider range of industrial fields.

The recycled PET film according to an embodiment may include the waste PET in a range of 30 wt% to 95 wt% and the virgin PET in a range of 5 wt% to 70 wt%, may preferably include the waste PET in a range of 70 wt% to 95 wt%, or may more preferably include the waste PET in a range of 80 wt% to 95 wt%. For example, the recycled PET film may include the waste PET in a range of 50 wt% to 90 wt% and the virgin PET in a range of 10 wt% to 50 wt%, may include the waste PET in a range of 60 wt% to 90 wt% and the virgin PET in a range of 10 wt% to 40 wt%, or may include the waste PET in a range of 60 wt% to 80 wt% and the virgin PET in a range of 20 wt% to 40 wt%.

According to the recycled PET film according to an embodiment of the present invention, the recycled PET film may be prepared by including the waste PET up to an upper limit of 95 wt%, thereby solving environmental pollution problems such as air pollution, geological pollution, and underwater pollution caused by landfill or incineration of waste PET.

In addition, even when a large amount of waste PET is included, excellent recycled PET film forming properties may be implemented to continuously prepare a recycled PET film and implement significantly high transparency as compared with a recycled PET film according to a related art prepared by including waste PET. Thus, the recycled PET film

according to an embodiment may be preferred.

The recycled PET film according to an embodiment may have a thickness of 10 μm to 150 μm, specifically 10 μm to 100 μm, and more specifically 10 μm to 50 μm, but the thickness of the recycled PET film is not limited as long as the thickness of the recycled PET film does not deteriorate the physical properties of the prepared recycled PET film.

The recycled PET film having a thickness in such a range may vary according to a degree by which an unstretched PET film output from a T-die is stretched in a machine direction (MD) and a transverse direction (TD) in a method of preparing a recycled PET film, which will be described below, but may have minimal surface scratches, pinholes, or fracture holes to be preferred. In addition, the PET film having a thickness in such a range may be a single film or a stacked film. As the PET film is stacked, a thickness thereof may increase, but the present invention is not limited thereto.

Specifically, the stacked film may be a film including two or more recycled PET film layers and may be a stacked structure including a single PET film layer and different types of layers (for example, a layer not including recycled polyester or a layer including another type of resin).

The waste PET may have a weight average molecular weight of 40,000 g/mol to 200,000 g/mol, preferably 100,000 g/mol or less, and more preferably 40,000 g/mol to 80,000 g/mol in which recycled PET film formability is excellent, but the present invention is not limited thereto.

Hereinafter, the physical properties of the recycled PET film of the present invention will be described.

The recycled PET film according to an embodiment may include the waste PET in a range of 30 wt% to 95 wt% and may be prepared by including the molding modifier so that significantly high PET film forming properties may be implemented to have a more excellent haze than a recycled PET film according to a related art.

In addition, the recycled PET film according to an embodiment may include the glycerin-based compound represented by Formula 1 to have a lower color difference value and significantly higher yellowing resistance as compared with a recycled PET film according to a related art and also may include a small amount of the complementary color agent to maintain a heat shrinkage ratio and breaking strength.

As described above, the recycled PET film according to an embodiment may satisfy a yellowing resistance of 5 % to 10 %, the color difference value L of 59 to 70, and the color difference value b of 5 or less, as measured through a measurement method defined in the present invention, and at the same time the following physical properties may be implemented.

According to an embodiment, a breaking strength of the recycled PET film measured according to ASTM D882 may be in a range of 10 kgf/mm$^2$ to 30 kgf/mm$^2$ in both of an MD and a TD, preferably 15 kgf/mm$^2$ or more, and more preferably 20 kgf/mm$^2$ or more.

In the recycled PET film having a breaking strength in such a range, a content of the complementary color agent may be adjusted, the molding modifier may be included to implement significantly high recycled PET film forming properties, and a high amount of the complementary color agent may be prevented from suppressing the breaking strength of the recycled PET film, thereby satisfying the breaking strength in such a range.

According to another embodiment, a heat shrinkage ratio of the recycled PET film may be 5 % or less in the MD and 1 % or less in the TD. A lower limit of the heat shrinkage ratio may be 0.1 % or more in the TD, preferably 2 % or less in the MD direction, and more preferably 1 % or less in the MD. The lower limit may be 0.5 % or more in the MD.

The recycled PET film having a heat shrinkage ratio in such a range may include the complementary color agent in a range of 100 ppm or less and may include the complementary color agent containing the glycerin-based compound represented by Formula 1, thereby solving a problem of thermal characteristics lowered due to a recycled PET film according to a related art including a complementary color agent.

Hereinafter, the method of preparing a recycled PET film of the present invention will be described in detail.

According to the present invention, in the method of preparing a recycled PET film, a recycled PET film may be prepared from a recycled chip prepared by including waste PET and a virgin chip prepared by including virgin PET. The recycled chip or the virgin chip include may include a molding modifier and an antiblocking agent, and thus the recycled PET film may have a more excellent degree of dispersion for metal compounds.

Furthermore, according to an embodiment, in the method of preparing a recycled PET film, the recycled PET film may be prepared to further include a specific complementary color agent, and thus a more significant degree of dispersion for metal compounds may be implemented so that a color difference value L may satisfy a range of 59 to 70, and yellowing resistance may satisfy a range of 5 % to 10 %.

The method of preparing a recycled PET film according to the present invention may include preparing a recycled chip by including waste PET, preparing a virgin chip by including virgin PET, and preparing a recycled PET film by including the recycled chip, the virgin chip, and a glycerin-based compound represented by Formula 1.

[Formula 1]

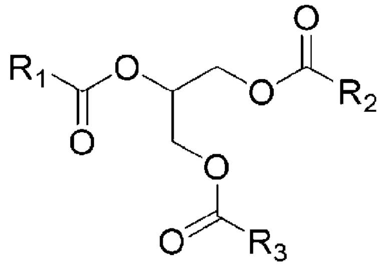

(wherein, in Formula 1, $R_1$, $R_2$, and $R_3$ are each independently straight or branched $C_1$-$C_{20}$ alkyl or straight or branched $C_1$-$C_{20}$ unsaturated alkyl.)

According to another embodiment, in the method of preparing a recycled PET film, the complementary color agent may be included in the recycled chip or the virgin chip, but the present invention is not limited thereto.

In the preparing of the recycled chip, the recycled chip is prepared through melting, and a temperature is not limited as long as a chip is formed through melting. For example, a waste PET flake is melted at a temperature of 240 °C to 260 °C to prepare the recycled chip. In the preparing of the recycled chip, a molding modifier may be added and compounded, or other additives may be added and melted together to prepare the recycled chip, but the present invention is not limited thereto.

According to an embodiment, in the preparing of the recycled PET film, the recycled PET film may include the recycled chip in a range of 30 wt% to 95 wt% and the virgin chip in a range of 5 wt% to 70 wt%. Specifically, the recycled PET film may include the recycled chip in a range of 70 wt% to 95 wt% and the virgin chip in a range of 5 wt% to 30 wt%. For example, the recycled PET film may include the waste PET in a range of 50 wt% to 90 wt% and the virgin PET in a range of 10 wt% to 50 wt%, may include the waste PET in a range of 60 wt% to 90 wt% and the virgin PET in a range of 10 wt% to 40 wt%, or may include the waste PET in a range of 60 wt% to 80 wt% and the virgin PET in a range of 20 wt% to 40 wt%.

In an embodiment, the molding modifier may be included in the preparing of the recycled chip or the preparing of the virgin chip and may include metal ions derived from a molding modifier in the recycled chip or virgin chip.

Specifically, in the method of preparing a recycled PET film, the molding modifier may be included with virgin PET in the preparing of the virgin chip, and thus a virgin chip including metal ions derived from the molding modifier may be more preferable. A recycled PET film prepared by including the virgin chip containing the metal ions may include a molding modifier with an excellent degree of dispersion and thus may be preferred.

As an embodiment, the virgin chip may be prepared by including the molding modifier in a range of 150 ppm to 14,000 ppm, preferably 500 ppm to 10,000 ppm, and more preferably 1,000 ppm to 6,000 ppm.

According to the virgin chip prepared by including the molding modifier in such a ppm range, a problem of low miscibility between waste PET and a molding modifier may be solved, thereby solving a problem that metal ions derived from a molding modifier of a recycled PET film according to a related art agglomerate to increase a haze and a color difference value.

In the virgin chip prepared by including the molding modifier in such a range, ppm of the included molding modifier may vary according to wt% of the virgin chip included in preparing of the recycled PET film, but a ppm range of the molding modifier included in preparing of the virgin chip may be satisfied.

That is, the recycled PET film of the present invention may be prepared by including the molding modifier in a range of 100 ppm to 700 ppm, specifically 100 ppm to 500 ppm, and more specifically 100 ppm to 300 ppm. However, there is no limitation as long as metal ions included in the prepared recycled PET film satisfy a range of 10 ppm to 100 ppm.

As described above, examples of the molding modifier may include a mixture of one or more selected from magnesium hydroxide, magnesium acetate, sodium acetate, sodium hydroxide, calcium acetate, lithium acetate, calcium phosphate, magnesium oxide, magnesium hydroxide, magnesium alkoxide, manganese acetate, zinc acetate, trimethyl phosphate, and triethyl phosphate.

In order to implement excellent recycled PET film forming properties even with a smaller amount of the molding modifier, the molding modifier may preferably include magnesium acetate, sodium acetate, and trimethyl (ethyl) phosphate.

In an embodiment, the virgin chip may include an antiblocking agent in a range of 140 ppm to 20,000 ppm, preferably 1,000 ppm to 20,000 ppm, and more preferably 1,500 ppm to 18,000 ppm, but the range may vary according to wt% of the virgin chip included in preparing of the recycled PET film. The present invention is not limited thereto.

As an embodiment, in preparing of the recycled chip, the recycled chip may be prepared by melting and kneading a waste PET flake including waste PET at a temperature of 240 °C to 260 °C and may further include a molding modifier solution, an antiblocking agent, and additives, but the present invention is not limited thereto.

As an embodiment, the step of preparing the virgin chip may be the same as the step of preparing the recycled

chip. In order for a metal compound included in the prepared recycled PET film to have a significantly high degree of dispersion, it may be preferrable that the virgin chip is prepared to further include an antiblocking agent, a molding modifier, and additives, but the present invention is not limited thereto.

In the preparing of the recycled chip, a PET flake including recycled PET may be melted at a temperature of 240 °C to 260 °C, and a molding modifier may be added to the melted PET flake and vacuum-extruded to prepare the recycled chip in the form of bead.

Remarkably, the recycled chip prepared through the above-described method may significantly increase the low film forming properties of recycled PET or a recycled PET flake, and in particular, a metal compound included in the prepared PET film may have a high degree of dispersion.

In the recycled PET film according to an embodiment, there is no limitation on a stretching ratio of an unstretched recycled PET film, but the unstretched recycled PET film may be preferably stretched 3 times to 5 times the original length thereof in both of an MD and a TD.

Specifically, in a stretching process in the MD, a temperature may be in a range of 80 °C to 120 °C and preferably 100 °C to 120 °C, and a stretching ratio may be in a range of 3.8 times to 4.8 times and preferably 4.0 timers to 4.5 times. However, the present invention is not limited thereto. In addition, in a stretching process in the TD, a temperature may be in a range of 200 °C to 240 °C, preferably 210 °C to 240 °C, and more preferably 220 °C to 235 °C, and a stretching ratio may be the same as that in the MD.

Hereinafter, a PET film and a method of preparing the same according to the present invention will be described in more detail through Examples. However, the following Examples are only a reference for describing the present invention in detail, and the present invention is not limited thereto, and may be implemented in various forms. In addition, unless otherwise defined, all technical and scientific terms have the same meaning as commonly understood by a person skilled in the art to which the present invention pertains. The terms used in the description herein are only for effectively describing a certain example, and not intended to limit the present invention.

[Measurement method]

1. Color difference value measurement

Measurement was performed according to ASTM E313. A prepared recycled PET film was made into a sample having a size of 100 mm×100 mm, and the sample was disposed between two sample stands. Afterwards, a color difference value was measured by using a color difference meter (ZE-6000 manufactured by NIPPON DENSHOKU INDUSTRIES CO., LTD.) and was measured 5 times to calculate an average thereof.

2. Yellowing resistance measurement

Measurement was performed according to ASTM E313, and an initial L value of the prepared recycled PET film was obtained through a method of measuring the color difference value. After an accelerated test was performed for 168 hours by applying UV light, heat, and moisture to a film surface by using an accelerated test device (QUV-SE manufactured by Qpanel Inc., USA), acceleration was performed through the method of measuring the color difference value, and then an L value was measured. Afterwards, the measured initial L value and the L value after the acceleration were calculated through the following equation to obtain yellowing resistance.

yellowing resistance (%) = ((L value after acceleration - initial L value)/initial L value) × 100

3. Haze measurement

According to ASTM D-1003, a haze value was measured by using a haze meter (NDH 5000 manufactured by NIPPON DENSHOKU INDUSTRIES CO., LTD.).

4. Breaking strength measurement

A sample was prepared and measured according to ASTM D882, and a breaking strength of the sample was obtained by using a measuring device (Instron Corporation).

5. Heat shrinkage ratio measurement

A sample was cut into a rectangular shape having a size of 15 mm (MD)×400 mm (TD) in an MD and a TD, and a specimen having an effective measurement distance of 300 mm was prepared by drawing solid lines in the MD at points

spaced from both ends by 50 mm in the TD direction. Then, the specimen was thermally shrunk for 10 seconds in a state in which a point within 50 mm from any one end of the specimen without distinction of left and right was grabbed by using tweezers or the like to completely immerse the entire sample in hot water at a temperature of 90 °C±0.5 °C under no load condition. Thereafter, the specimen was left at room temperature for 1 minute, and then a length by which the initial 300 mm had decreased as represented by the straight line in the TD was measured, and the measured length was calculated through the following equation to calculate a heat shrinkage ratio.

[Equation]

$$\text{heat shrinkage ratio in TD of film} = ((300\text{ mm} - \text{length after shrinkage}/300\text{ mm}))\times 100$$

6. Nuclear magnetic resonance (NMR) measurement

By using an NMR device (AVANCE III 400 manufactured by Bruker Corporation), a sample was measured under conditions of a 1H probe and a resonance frequency of 400 MHz. Measurement results are shown in FIG. 1 below.

7. Inorganic component analysis

A sample was measured by using ICP-OES (Avio 550 Max manufactured by PerkinElmer, Inc.), and inorganic elements included in the sample were identified through energy dispersive X-ray (EDX) analysis of ash. Measurement results are shown in FIG. 2 below.

[Examples 1 to 6]

A recycled chip was prepared from a recycled PET flake by using a compounding device (manufactured by Erema company), and a virgin chip was prepared by including virgin chip PET, 1,000 ppm of magnesium acetate (MgAc), 150 ppm of sodium acetate (NaAc), 200 ppm of triethyl phosphate (TEP), and 3,000 ppm of an antiblocking agent by using the compounding device (manufactured by Erema company).

Afterwards, 80 wt% of the prepared recycled chip and 20 wt% of the virgin chip were input to a film manufacturing machine, melted, and mixed at a temperature of 260 °C, and after the mixing was completed, a triacylglyceryl-based compound (TAG; for example, glyceryl triacetate) represented by Formula 1 was added at a concentration shown in Table 1 below as a complementary color agent. Afterwards, a PET sheet was discharged from a T-Die at a temperature of 270 °C, and the discharged PET sheet was stretched 4.5 times the original length in an MD and a TD to prepare a recycled PET film. NMR measurement and inorganic component measurement were performed on the prepared the recycled PET film through such a method. Measurement results are shown in FIGS. 1 and 2 below, and a concentration of each included inorganic material is shown in Table 1 below.

Thereafter, the prepared recycled PET film was measured through such a measurement method. Measurement results are shown in Table 2 below.

[Example 7]

A recycled PET film was prepared in the same manner as in Example 4, except that a virgin chip was prepared without magnesium acetate, sodium acetate, and triethyl phosphate.

Thereafter, the prepared recycled PET film was measured through such a measurement method. Measurement results are shown in Table 2 below.

[Example 8]

A recycled PET film was prepared in the same manner as in Example 4, except that a virgin chip was prepared without an antiblocking agent.

Thereafter, the prepared recycled PET film was measured through such a measurement method. Measurement results are shown in Table 2 below.

[Example 9]

A recycled PET film was prepared in the same manner as in Example 4, except that a virgin chip was prepared without magnesium acetate, sodium acetate, triethyl phosphate, and an antiblocking agent.

Thereafter, the prepared recycled PET film was measured through such a measurement method. Measurement results are shown in Table 2 below.

[Comparative Example 1]

A recycled PET film was prepared in the same manner as in Example 4, except that titanium dioxide was used as a complementary color agent.
Thereafter, the prepared recycled PET film was measured through such a measurement method. Measurement results are shown in Table 2 below.

[Comparative Example 2]

A recycled PET film was prepared in the same manner as in Example 4, except that a virgin chip was prepared without magnesium acetate, sodium acetate, and triethyl phosphate and titanium dioxide was used as a complementary color agent.
Thereafter, the prepared recycled PET film was measured through such a measurement method. Measurement results are shown in Table 2 below.

[Comparative Example 3]

A recycled PET film was prepared in the same manner as in Example 4, except that a complementary color agent was not added.
Thereafter, the prepared recycled PET film was measured through such a measurement method. Measurement results are shown in Table 2 below.

[Comparative Example 4]

A recycled PET film was prepared in the same manner as in Example 4, except that a virgin chip was prepared without magnesium acetate, sodium acetate, and triethyl phosphate and a complementary color agent was not included.
Thereafter, the prepared recycled PET film was measured through such a measurement method. Measurement results are shown in Table 2 below.

[Table 1]

| | PET resin (wt%) | | Complementary color agent | | Molding modifier (ppm) | | | Antiblocking agent (ppm) |
|---|---|---|---|---|---|---|---|---|
| | Waste PET | Virgin PET | Type | Density (ppm) | MgAc | NaAc | TEP | |
| Example 1 | 80 | 20 | TAG | 5 | 200 | 30 | 40 | 700 |
| Example 2 | 80 | 20 | TAG | 10 | 200 | 30 | 40 | 700 |
| Example 3 | 80 | 20 | TAG | 20 | 200 | 30 | 40 | 700 |
| Example 4 | 80 | 20 | TAG | 50 | 200 | 30 | 40 | 700 |
| Example 5 | 80 | 20 | TAG | 100 | 200 | 30 | 40 | 700 |
| Example 6 | 80 | 20 | TAG | 200 | 200 | 30 | 40 | 700 |
| Example 7 | 80 | 20 | TAG | 50 | - | - | - | 700 |
| Example 8 | 80 | 20 | TAG | 50 | 200 | 30 | 40 | - |
| Example 9 | 80 | 20 | TAG | 50 | - | - | - | - |
| Comparative Example 1 | 80 | 20 | TiO2 | 50 | 200 | 30 | 40 | 700 |
| Comparative Example 2 | 80 | 20 | $TiO_2$ | 50 | - | - | - | 700 |
| Comparative Example 3 | 80 | 20 | - | - | 200 | 30 | 40 | 700 |
| Comparative Example 4 | 80 | 20 | - | - | - | - | - | 700 |

[Table 2]

| | Haze (%) | Heat shrinkage ratio (200 °C) (%) | | Color difference value | | | Yellowing resistance (%) | Breaking strength (kgf/mm$^2$) | |
|---|---|---|---|---|---|---|---|---|---|
| | | TD | MD | L | a | b | | TD | MD |
| Example 1 | 5.0 | 0.2 | 3.2 | 64.94 | -1.49 | 0.49 | 10 | 29.7 | 30.0 |
| Example 2 | 4.8 | 0.3 | 3.4 | 64.21 | -1.48 | 0.47 | 8 | 28.3 | 28.7 |
| Example 3 | 3.9 | 0.2 | 3.5 | 60.15 | -1.95 | 0.12 | 6 | 29.4 | 29.5 |
| Example 4 | 2.0 | 0.2 | 3.1 | 59.05 | -1.65 | 0.09 | 10 | 29.8 | 30.0 |
| Example 5 | 2.3 | 0.7 | 4.4 | 60.03 | -1.78 | 0.21 | 9 | 24.4 | 26.1 |
| Example 6 | 2.5 | 1.0 | 4.9 | 62.21 | -1.23 | 0.25 | 9 | 24.8 | 24.5 |
| Example 7 | 6.1 | 0.4 | 3.3 | 60.11 | -1.71 | 0.11 | 8 | 24.5 | 23.7 |
| Example 8 | 5.2 | 1.2 | 4.5 | 61.05 | -1.75 | 0.13 | 7 | 24.8 | 25.9 |
| Example 9 | 10.1 | 0.4 | 3.7 | 64.81 | -1.15 | 0.25 | 6 | 20.1 | 21.1 |
| Comparative Example 1 | 15.2 | 0.2 | 3.5 | 68.77 | -1.41 | 0.74 | 15 | 29.8 | 30.4 |
| Comparative Example 2 | 18.7 | 1.9 | 8.1 | 70.08 | -1.38 | 0.80 | 14 | 29.8 | 39.5 |
| Comparative Example 3 | 20.2 | 0.2 | 3.3 | 86.81 | -5.42 | 1.89 | 29 | 27.4 | 28.4 |
| Comparative Example 4 | 42.1 | 3.0 | 12.1 | 90.12 | -8.9 | 3.54 | 45 | 18.4 | 18.1 |

Regarding Examples 1 to 6 in Table 2, physical properties according to the content of the complementary color agent can be confirmed. Although the haze of Examples 4 to 6 was in a range of 2 % to 3 %, it was confirmed that the heat shrinkage ratio and breaking strength were decreased in Examples 5 and 6.

This means that, as the content of TAG increases, the transparency and yellowing resistance of the recycled PET film may increase, and the color difference value may be significantly decrease, but the recycled PET film including an excessive amount of a complementary color agent has decreased breaking strength and an increased heat shrinkage ratio.

Regarding Example 7 in Table 2, the type and content of the complementary color agent were the same as those of Example 4, but the molding modifier was not included, and it was confirmed that the haze increased and the breaking strength and elongation at break decreased as compared with Example 4.

This means that TAG, magnesium acetate, sodium acetate, and triethyl phosphate are included at the same time, and thus the haze and the color difference value remarkably decrease. In addition, this means that the prepared recycled PET film of Example 4 includes the molding modifier to have increased film forming properties, and thus the breaking strength and breaking elongation of the prepared recycled PET film increase.

Regarding Example 8 in Table 2, in Example 8, the antiblocking agent was not included, and it was confirmed that, as compared with Example 4, the haze increased, the breaking strength and breaking elongation significantly decreased, and the heat shrinkage ratio significantly increased. This means that the recycled PET film including the antiblocking agent has excellent dimensional stability against high heat and excellent recycled PET film forming properties.

In addition, regarding Example 9 in Table 2, the physical property behavior of the PET film could be more clearly confirmed when the molding modifier and the antiblocking agent are not included, and it was confirmed that the haze, color difference value, and breaking strength of Example 9 significantly decreased as compared with Example 4, and the heat shrinkage ratio also significantly increased.

This means that, as an inorganic content in the prepared recycled PET film decreases, the heat shrinkage ratios significantly decrease, and also the molding modifier and antiblocking agent improve film forming properties to affect the breaking strength and breaking elongation of the prepared recycled PET film.

In Table 2, the recycled PET films of Comparative Example 1 and Comparative Example 2 were PET films prepared by including titanium dioxide as a complementary color agent, and it was confirmed that the heat shrinkage ratio increased, but the haze and color difference value significantly increased to decrease the transparency of the recycled PET film, and it was confirmed that, in Comparative Example 2, the haze and the color difference value further increased.

This means that although the heat shrinkage ratio may be decreased by including a complementary color agent consisting of inorganic particles, a complementary color effect is low as compared with TAG.

In Table 2, in Comparative Example 3 and Comparative Example 4, the complementary color agent was not included, and the haze was measured to be 20 % or more and a color difference value L was measured to be 80 or more, which meant that the transparency of the recycled PET film not including a complementary color agent was at a level that was not commercially available, and it was confirmed that the recycled PET film of Comparative Example 4 not including the molding modifier has further decreased transparency.

As described above, the present invention has been described with specific details and limited examples and comparative examples, but these are provided only to facilitate a more general understanding of the present invention, and the present invention is not limited to the above examples. Those skilled in the art can make various modifications and variations from this description.

Accordingly, the spirit of the present invention should not be limited to the described embodiments, and the scope of the patent claims described below as well as all modifications that are equivalent or equivalent to the scope of this patent claim shall fall within the scope of the spirit of the present invention.

## Claims

1. A recycled polyethylene terephthalate (PET) film comprising:

waste PET and virgin PET as PET resin components; and
a complementary color agent containing a glycerin-based compound represented by Formula 1 below,
wherein, in the recycled PET film, yellowing resistance is in a range of 5 % to 10 %, a color difference value L is in a range of 59 to 70, and a color difference value b is 5 or less, wherein the yellowing resistance is measured according to ASTM D1925 and the color differences are measured according to ASTM E313:

[Formula 1]

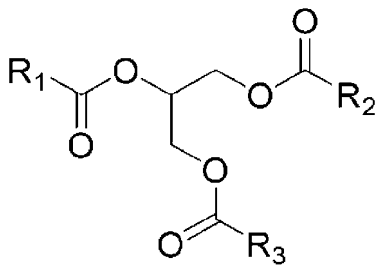

wherein, in Formula 1, $R_1$, $R_2$, and $R_3$ are each independently straight or branched $C_1$-$C_{20}$ alkyl or straight or branched $C_1$-$C_{20}$ unsaturated alkyl.

2. The recycled PET film of claim 1, wherein the complementary color agent comprises an organic compound represented by Formula 2 below, an organic compound represented by Formula 3 below, or a mixture thereof:

[Formula 2]

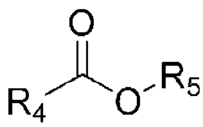

wherein, in Formula 2, $R_4$ and $R_5$ are each independently straight or branched $C_1$-$C_{20}$ alkyl or straight or branched $C_1$-$C_{20}$ unsaturated alkyl, and

[Formula 3]

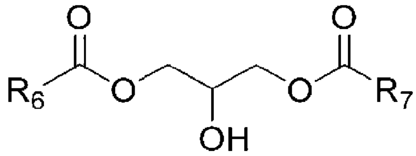

wherein, in Formula 3, $R_6$ and $R_7$ are each independently straight or branched $C_1$-$C_{20}$ alkyl or straight or branched $C_1$-$C_{20}$ unsaturated alkyl.

**3.** The recycled PET film of claim 1, wherein the recycled PET film comprises the complementary color agent in a range of 5 ppm to 200 ppm.

**4.** The recycled PET film of claim 1, wherein, in Formulas 1 to 3, $R_1$, $R_2$, $R_3$, $R_4$, $R_5$, $R_6$, and $R_7$ are each independently straight or branched $C_1$-$C_{12}$ alkyl or straight or branched $C_1$-$C_{12}$ unsaturated alkyl.

**5.** The recycled PET film of claim 1, wherein the recycled PET film comprises metal ions in a range of 10 ppm to 200 ppm, wherein the metal ions are derived from a virgin chip prepared to comprise a molding modifier.

**6.** The recycled PET film of claim 5, wherein the recycled PET film satisfies Expressions 1 to 3 below:

[Expression 1]

$$10 \leq [Mg] \leq 100$$

[Expression 2]

$$0.1 \leq [Na] \leq 10$$

[Expression 3]

$$1 \leq [P] \leq 50$$

(wherein, in Expressions 1 to 3,
[Mg] is a concentration (ppm) of magnesium ions contained in the recycled PET film,
[Na] is a concentration (ppm) of sodium ions contained in the recycled PET film, and
[P] is a concentration (ppm) of phosphorus ions contained in the recycled PET film.)

**7.** The recycled PET film of in claim 1, wherein the recycled PET film comprises an antiblocking agent in a range of 300 ppm to 1,000 ppm.

**8.** The recycled PET film as claimed in claim 1, wherein the recycled PET film has a breaking strength measured according to ASTM D882 is in a range of 10 $kgf/mm^2$ to 30 $kgf/mm^2$ in both of a machine direction (MD) and a transverse direction (TD).

**9.** The recycled PET film of claim 1, wherein the recycled PET film has a heat shrinkage ratio of 5 % or less in an MD and 1 % or less in a TD at a temperature of 200 °C.

**10.** The recycled PET film of claim 1, wherein the recycled PET film comprises the waste PET in a range of 30 wt% to 95 wt% and the virgin PET in a range of 5 wt% to 70 wt%.

**11.** A method of preparing a recycled polyethylene terephthalate (PET) film, the method comprising:

preparing a recycled chip by including waste PET;
preparing a virgin chip by including virgin PET; and
preparing a recycled PET film by including the recycled chip, the virgin chip, and a glycerin-based compound represented by Formula 1:

[Formula 1]

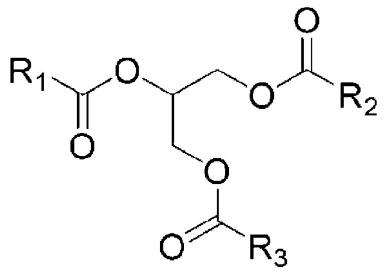

wherein, in Formula 1, $R_1$, $R_2$, and $R_3$ are each independently straight or branched $C_1$-$C_{20}$ alkyl or straight or branched $C_1$-$C_{20}$ unsaturated alkyl.

**12.** The method of claim 11, wherein in the preparing of the recycled PET film, the recycled PET film comprises the recycled chip in a range of 30 wt% to 95 wt% and the virgin chip in a range of 5 wt% to 70 wt%.

**13.** The method of claim 11, wherein the virgin chip is prepared by including a molding modifier in a range of 150 ppm to 14,000 ppm.

**14.** The method of claim 11, wherein the virgin chip is prepared by including an antiblocking agent in a range of 150 ppm to 20,000 ppm.

Fig. 1

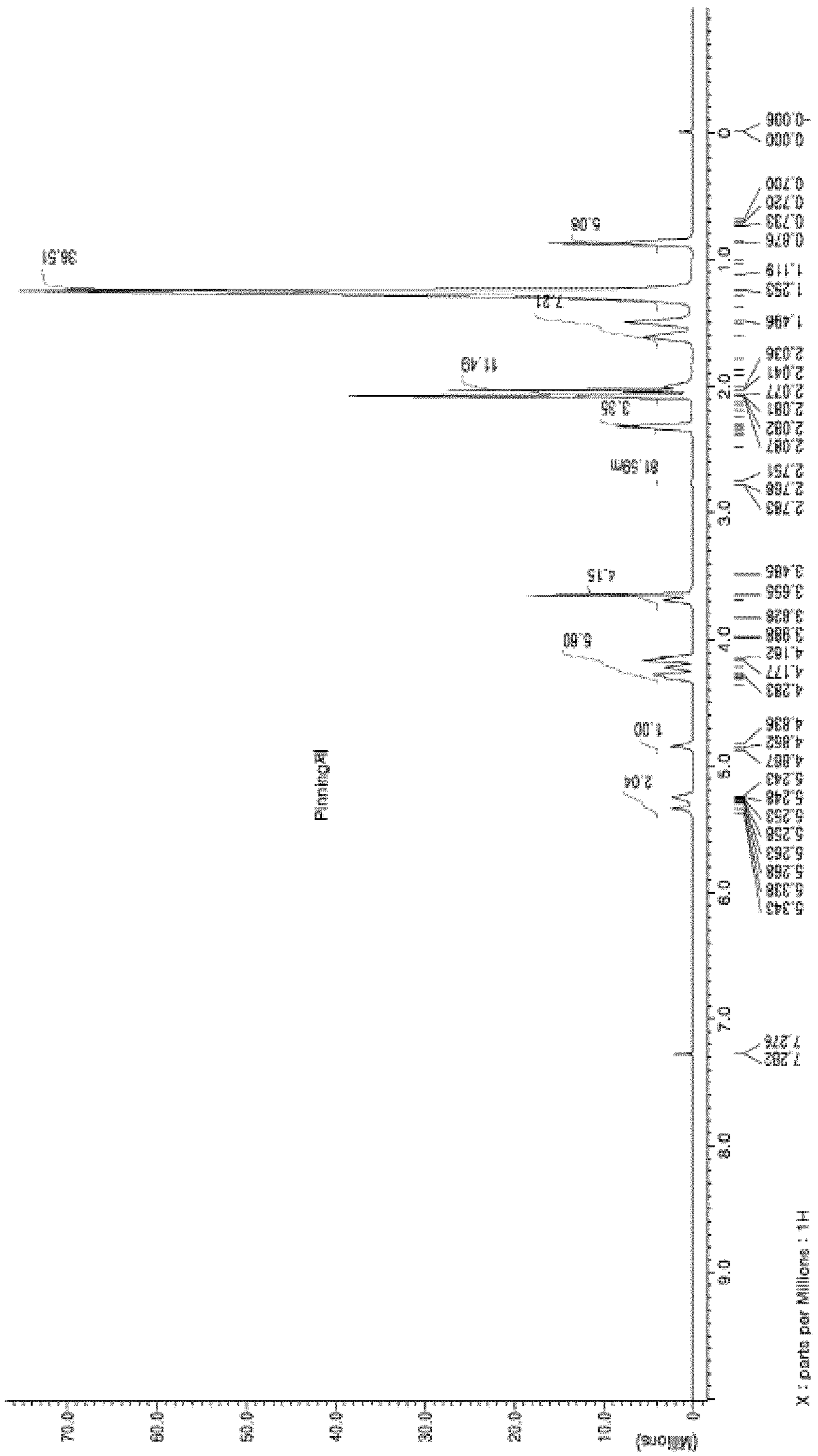
36.51
5.06
7.21
11.49
3.35
81.59m
4.15
5.60
1.00
2.04
Pinning제
-0.006
0.000
0.700
0.720
0.733
0.876
1.119
1.253
1.496
2.036
2.041
2.077
2.081
2.082
2.087
2.751
2.768
2.783
3.486
3.655
3.828
3.988
4.162
4.177
4.283
4.836
4.862
4.867
5.243
5.248
5.253
5.258
5.263
5.268
5.338
5.343
7.276
7.282
X : parts per Millions : 1H
(Millions)

Fig. 2

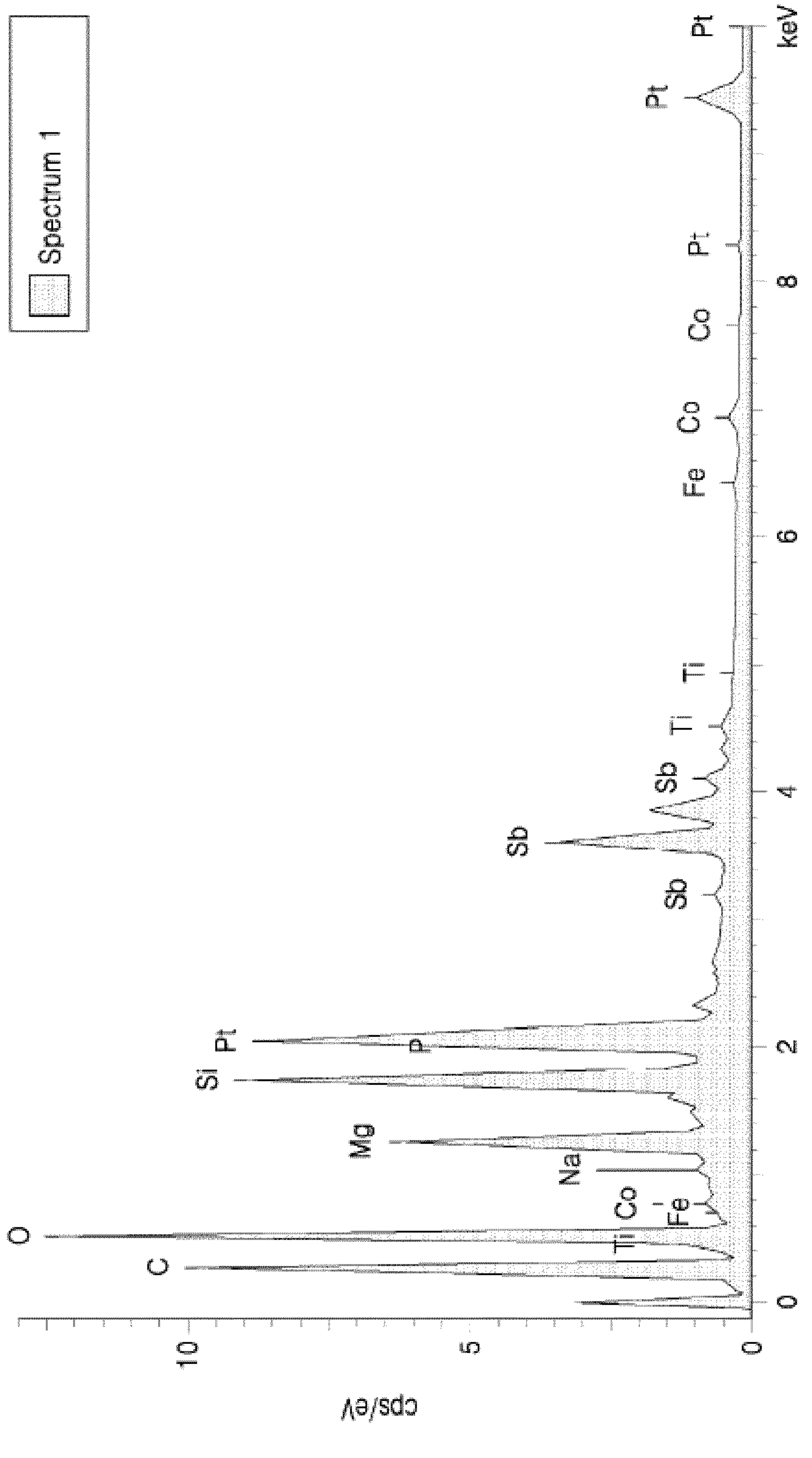
Spectrum 1
cps/eV
keV
0
5
10
0
2
4
6
8
C
O
Ti
Co
Fe
Na
Mg
Si
Pt
P
Sb
Sb
Sb
Ti
Ti
Fe
Co
Co
Pt
Pt
Pt

## INTERNATIONAL SEARCH REPORT

International application No.
**PCT/KR2023/012657**

**A. CLASSIFICATION OF SUBJECT MATTER**

**C08J 5/18**(2006.01)i; **C08L 67/02**(2006.01)i; **C08K 5/10**(2006.01)i; **C08K 5/11**(2006.01)i

According to International Patent Classification (IPC) or to both national classification and IPC

**B. FIELDS SEARCHED**

Minimum documentation searched (classification system followed by classification symbols)

C08J 5/18(2006.01); B29B 11/10(2006.01); B29C 48/08(2019.01); C08G 63/183(2006.01); C08J 5/00(2006.01); C08K 5/103(2006.01); C08L 67/00(2006.01); C08L 67/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 재생 PET 필름(recycled PET film), 폐PET(waste PET), 신재 PET(virgin PET), 보색제(colorant), 글리세린계 화합물(glycerin-based compound), 글리세릴 트리아세테이트(glyceryl triacetate)

**C. DOCUMENTS CONSIDERED TO BE RELEVANT**

| Category* | Citation of document, with indication, where appropriate, of the relevant passages | Relevant to claim No. |
|---|---|---|
| A | US 5503790 A (CLEMENTS, J.) 02 April 1996 (1996-04-02)<br>See claim 1; and columns 2 and 3. | 1-14 |
| A | JP 2003-041101 A (DAICEL POLYMER LTD.) 13 February 2003 (2003-02-13)<br>See claim 1; and paragraphs [0013], [0015], [0024], [0025] and [0031]. | 1-14 |
| A | JP 2004-359892 A (SAKAMOTO YAKUHIN KOGYO CO., LTD.) 24 December 2004 (2004-12-24)<br>See claim 1; and paragraphs [0005] and [0028]. | 1-14 |
| A | KR 10-2022-0097273 A (KOLON INDUSTRIES, INC.) 07 July 2022 (2022-07-07)<br>See entire document. | 1-14 |
| A | WO 2022-058954 A1 (DE FREITAS, Aires Mauro) 24 March 2022 (2022-03-24)<br>See entire document. | 1-14 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 January 2024** | **05 January 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**
**Information on patent family members**

International application No.
**PCT/KR2023/012657**

| Patent document cited in search report | Publication date (day/month/year) | Patent family member(s) | Publication date (day/month/year) |
|---|---|---|---|
| US 5503790 A | 02 April 1996 | US 5693278 A | 02 December 1997 |
| | | US 5849381 A | 15 December 1998 |
| JP 2003-041101 A | 13 February 2003 | None | |
| JP 2004-359892 A | 24 December 2004 | None | |
| KR 10-2022-0097273 A | 07 July 2022 | None | |
| WO 2022-058954 A1 | 24 March 2022 | EP 3971226 A1 | 23 March 2022 |
| | | EP 4214264 A1 | 26 July 2023 |
| | | US 2023-0340249 A1 | 26 October 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020130035897 A
- KR 1020220003140 A